Europäisches Patentamt

European Patent Office

Office européen des brevets

(11) Publication number: **0 245 065**
A2

# EUROPEAN PATENT APPLICATION

(21) Application number: 87303979.6

(22) Date of filing: 01.05.87

(51) Int. Cl.⁴: **B 63 B 21/56**

(30) Priority: 02.05.86 GB 8610813

(43) Date of publication of application:
11.11.87 Bulletin 87/46

(84) Designated Contracting States:
AT BE CH DE ES FR GB IT LI NL SE

(71) Applicant: **RAYCHEM LIMITED**
Rolls House 7, Rolls Buildings Fetter Lane
London, EC4 1NL (GB)

(72) Inventor: Lowe, Frank
20 Thurney Drive
Grange Park Swindon Wiltshire (GB)

Rogers, Albert
7 Mellow Ground
Haydon Wick Swindon SN2 3QJ Wiltshire (GB)

(74) Representative: Benson, John Everett et al
Raychem Limited Intellectual Property Law Department
Swan House 37-39, High Holborn
London WC1 (GB)

(54) Fairing.

(57) A fairing for reducing vibration of a cable towed through
water comprises a heat-recoverable fabric on a tubular body
(2), a flange (4) secured to the body, and a plurality of trailing
members (6) secured to the flange. The tubular body is
heat-recovered around the cable to secure the fairing to the
cable (16).

Fig. 1.

EP 0 245 065 A2

## Description

Fairing

This invention relates to a fairing suitable for reducing the vibration of an object which is to be towed through water.

When an object, for example a cable, is towed through water, it is subject to mechanical vibration. For many applications this is undesirable. For example, where the object is a cable carrying electrical current the vibration may cause signal attenuation, and for all objects the vibration may cause fatigue.

It is known to reduce the vibration of a towed object by adding fairings to the object. Fairings are typically flexible trailing members attached to the object, or rigid members rotatably mounted relative to the object. The fairings flex or rotate to compensate for the water flow over the object and thereby reduce the drag on the object and hence any vibration.

US 3368514 (Kelly) described, with reference to Figure 7, one faired cable comprising hair-like fairings which are looped through a basket weave armour on the cable. US 3472196 described another type of cable fairing in which the body of the fairing, which surrounds the cable, comprises a heat shrinkable material.

We have discovered that a fairing which is particularly easy to install can be made with a heat recoverable fabric as the body of the fairing. Advantageously trailing members are provided on a flange secured to the fabric body. This makes it particularly easy to install the fairing, by recovering the fabric, without damaging to the trailing members.

The present invention provides a fairing suitable for reducing the vibration of an object which is towed through water, comprising:

a heat recoverable, fabric, tubular body
a flange secured to the tubular body and
a plurality of trailing members secured to the flange.

The fairing of the invention use a recoverable fabric. A recoverable fabric is a fabric which, as a whole, will recover, on heating (if it is heat recoverable) or other treatment, towards an original shape from which it has previously been deformed, or towards a new shape governed by the recovered configuration of the fibres it contains, or towards another new configuration from which the article as a whole has not been previously deformed.

The fabric will generally comprise a shrinkable (preferably heat-shrinkable) sleeve comprising preferably polymeric fibres exhibiting (in the final product at least) the property of elastic or plastic memory, which property is described, for example, in US patents 2027962; 3086242 and 3597372. As is made clear in, for example, US patent 2027962, an original dimensionally heat-stable form may be a transient form in a continuous process in which, for example, an extruded tube is expanded (or in the present case a fabric tube is expanded or fibres are stretched, generally during their formation) to a dimensionally heat unstable form in a separate stage.

In the production of polymeric heat-recoverable articles in general, the polymeric material may be cross-linked at any stage in the production of the article that will improve temperature stability while enhancing the desired dimensional recoverability. One manner of producing a heat-recoverable article comprises stretching or shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is heat-unstable, application of heat will cause the article to assume its original heat-stable shape.

Preferably the fabric comprises fibres which have been rendered heat recoverable by cross-linking by irradiation. Where this is the case, it is convenient to incorporate the cross-linking step into the overall manufacture of the fibre. The fibre can be extruded, stretched at a temperature below its melting temperature, preferably by an amount of from 500-2000%, then subjected to irradiation to effect cross-linking. Another way of making the fibre is to extrude the material, irradiate to cross-link, then heat the fibre preferably to above its melting temperature, stretch the fibre, and then cool. HDPE fibres are preferably irradiated with a dose of from about 5 to about 35 megarads, more preferably from about 5 to about 25 megarads, and most preferably from about 7 to about 18 megarads, especially from 10 to above 18 megarads. The gel content that results is preferably at least 20%, more preferably at least 30% and most preferably at least 40%. In practice a maximum of about 90% will be sufficient for most purposes.

As an alternative the fabric may be heat recoverable by comprising elastomeric members held in a stretched state by a second member, which, upon heating weakens and thus allows the elastomeric members to recover.

The recoverable fibres of the fabric preferably have a recovery temperature in the range 120 - 300°C.

Recoverable fabric materials are disclosed in the following patent applications, the disclosure of which are incorporated by reference: British patent application publication nos. 2107216 (MP0790), 2135836 (RK169), 2133740 (RK177), 2134334 (RK178).

When recoverable by heat, the recovery temperature is preferably 60°C or more, more preferably from 80-250°C, such as 120-150°C.

According to the invention the trailing members are secured to the flange rather than to the tubular body. This is advantageous because it means that the securement of the trailing members does not weaken the fabric of the tubular body. Such weakening could inter alia affect the recovery of the body, and also its abrasion resistance.

The trailing members are secured to a flange which is itself secured to the fabric body. Preferably the flange also comprises a fabric, and the flange is secured to the fabric body by interlinking fibres of the flange with fibres of the body. This arrangement minimises the stress on the fibres of the tubular body, and provides that recovery of the tubular body is unaffected, or at least little affected, by the securement of the flange. Where the flange is connected to the body by another method, for example stitching, stresses may be introduced into the fibres of the body which may cause weakening of the fabric tubular body.

In the preferred embodiment the junction between the flange and the body defines a join-line and the trailing members are secured to the flange at a distance which is at least 3 mm from the join-line. This is advantageous where the treatment applied to recover the body could damage the trailing members. The separation of the trailing members from the body enables a shielding device to be installed between the body and the trailing members, during recovery, to protect the trailing members. For example when the body comprises a heat recoverable fabric, and the trailing members comprise a heat-sensitive material, a heat shield may be positioned between the body and the trailing members during recovery.

Preferred materials for the trailing members are flexible materials. Two classes of materials are particularly suitable. First, materials made of oriented fibres of thermoplastic materials, and secondly, elastomeric based materials. The first class of materials have a so called "heat setting temperature" above which orientation of the fibres is effected. Typically the heat setting temperature of those materials suitable for use as flexible trailing members is lower than the recovery temperature of the recoverable fibres used in the tubular body. This means that to prevent damage to the trailing members during recovery, careful heating must be used, or more preferably a heat shield.

The fabric body is recoverable. Preferably it is radially shrinkable. This is preferably achieved using a tubular fabric in which at least the fibres running around the circumference of the body are recoverable.

The type of fibres used in the fabric, and the construction of the fabric which may be used will now briefly be considered. It is envisaged that any weave or knit or non-woven agglomeration of any fibres may be used providing the required degree of recovery can be induced. For the present purposes the term weave is to include braids, since the products are similar although the methods of production are different, the terms warp and weft are not strictly applicable to braids but when used herein with reference to weaves can be considered to relate also to braids by arbitrary selection of fibre directions. Recoverability is preferably provided by weaving or knitting fibres that are already recoverable, rather than by deforming a fabric woven or knitted from dimensionally stable fibres. In the first of these possibilities, the recovery ratio of the fabric will depend not only on the recovery ratio of its fibres, but also on the type of weave or knit.

In a preferred embodiment, the fabric will be constructed so that the recoverable fibres can effectively run at least in the direction where recovery is required. In a woven tube, therefore, in order to achieve radial recovery of the tube, the weft only, or both weft and warp, may be recoverable. In more complicated weaves, such as a triaxial weave, one or both of the warps may be recoverable. An advantage of the use of fabrics is that perfect uniaxial recovery, or a chosen split in recovery between two directons, may be achieved. Where the fabric is knitted, use of a recoverable fibre will produce recovery in all directions, although selective recovery can be provided by controlled warp or weft insertion.

Different effects, in terms of for example, final recovery ratio, strength and flexibility, will result from different types of weave or knit even if the same fibres are used. Examples of type of weave include plain, twill, broken twill, herring bone, satin, sateen, leno, hop sack, sack, matt and combinations of these. The weave may be single ply, or if higher density or thickner fabricss are desired multiple ply weaves may be used.

The fibres used to produce the recoverable fabric may be monofilaments, multifilaments, tapes (flat, twisted or fibrillated) or spun staple yarns. Greater flexibility can be attained using multifilament yarns, although problems can be encountered in cross-linking due to the high surface area. Examples of polymeric material that may be used include polyolefins such as polyethylene (especially HDPE) and polypropylene, polyamides (aliphatic and aromatic), polyesters, PVC copolymers, polyethertherketones, polyaryletherketones, and fluoropolymers such as FEP, ethylene perfluoro copolymer, polyvinylidine fluoride and TFE copolymers. The recovery temperature, by which we mean the temperature at which recovery will go substantially to completion, is preferably 60°C or more, more preferably from 80-250°C, most preferably from 120-150°C.

A non-recoverable fibre may be used as a reinforcement or supplement to the recoverable fibres, or may constitute the major component in one or more dimensions of the fabric. The following non-recoverable materials may be regarded as illustractive: glass fibres, carbon fibres, wires or other metal fibres, polyesters, aromatic polymers such as aromatic polyamides for example Kevlar (trade name), imides and ceramics or blends thereof. The non-recoverable component may be permanent, giving the recovered article enhanced strength etc., or may be present in discrete form only to locate the recoverable component during installation.

A preferred fabric for use in the present invention comprises a tubular weave having a weft of recoverable fibres preferably high density polyethylene fibres, and a warp of heat-stable (not recoverable) fibres, preferably polyaramid fibres, for example Kevlar fibres (poly-1-4-phenyleneterephthalamide). Preferably both the flange and the body comprise a weave, and fibres of either the weft or the warp of the flange are interlinked with fibres of the weft of the body, or fibres of the weft of the flange are interlinked with fibres of the warp of the body.

The fibres used in the fabric of the present invention are preferably twisted. 60-100 twists per metre are preferred, especially about 80 twists per metre.

The flange may comprise any suitable material, preferably it is flexible. The term "flexible" is used to mean that the flange can be bent by hand-force around a mandrel of 6 mm diameter. Preferably the flexibility is such that when the fairing is installed on a cable and towed through water at 2 knots (1 m/s) the flange flexes, under the drag of the water, to conform to the surface of the cable.

In a preferred embodiment the flange comprises a fabric and the fibres of the fabric flange are interlinked, preferably interwoven with the fibres of the body. In a preferred embodiment the flange comprises the same fabric as the body, except that it is not recovered, and is preferably not recoverable. Recovery of the fabric typically causes shrinkage, thickening and an increase in modulus of the material, which is undesirable for the flange where flexibility is required. Recoverability of the flange fabric material may be prevented by cross-linking the flange (for example by irradiation) or by using non recoverable fibres in the flange.

The trailing members may comprise any suitable material. The materials are preferably flexible, while having a tensile strength of at least 4 MPa to give abrasion resistance. As stated above two classes of material are preferred. As example of the first class of material, which comprise oriented fibres of thermoplastic materials, there may be mentioned polyesters, polyamides (aliphatic and aromatic) including nylons, kevlar, (poly-1,4,-phenyleneterephthalamide) and nomex, (poly-m-phenyleneisophthalamide). As examples of the second class of material, which are elastomers, there may be mentioned neoprene, polyurethanes, nitriles, butiles and silicones.

The trailing members may, for example be in the form of fibres or ribbons, or fabric. The members may comprise a single material or a combination. A preferred construction comprises a fabric coated on one or both sides. Any of the materials mentioned above may be used in the combination.

Preferably the trailing members do not fray in water. As an example, they may be heat sealed or adhesive sealed at the edges, or where they comprise a fabric, they may include a selvedge.

The trailing members are preferably at least 4 times, at most 20 times, and preferably 5 to 9 times as long as the diameter of the tubular body before recovery.

The trailing members may be secured to the flange by any suitable method, for example by stitching, stapling, riveting, press-studs, adhesive, or, where the flange comprises a fabric, by looping the trailing members amongst fibres of the flange.

The trailing members may extend from one or both sides of the flange. Preferably the trailing members extend from both sides of the flange. The members are preferably evenly distributed on both sides of the flange to provide a balanced fairing. In one embodiment a single trailing member is positioned in the shape of a long-stemmed letter "M" with the middle of the "M" over the edge of the flange and the long stems providing trailing members on either side of the flange.

The flange may be secured to the body along one edge, in which case the join-line is a straight line, and all the trailing members extend out of one side of the body. As another example the join-line may be helical, so that the trailing members extend from around the entire body. More than one flange may be used.

In one embodiment the fabric body includes an adhesive filament. The adhesive filament is preferably heat activatable, and where the fabric is heat recoverable, heating to effect recovery preferably also activates the adhesive. The adhesive is preferably a hot-melt adhesive, preferably havng a melting point below the recovery temperature of the fabric. The adhesive inter alia bonds the fairing to the underlying object, preventing movement of the fairing along the object. It could also act as a moisture barrier, preventing water accessing the object. This may be desirable for corrosion purposes. Alternatively adhesive could be incorporated in the fairing by extruding an adhesive tube and positioning the fabric body over it.

A typical application of the fairing of the present invention is a cable fairing. Faired cables during their operation are frequently reeled onto and from drums on a ship's deck. During this operation the fairings are subject to mechanical abrasion. For this application, and other applications where abrasion resistance is desired, it is preferred to use materials for the fabric body, flange and trailing members which are strong and abrasion resistant. Preferably the tensile strength of the trailing members and the fibres of the fabric is at least 4, preferably at least 6 MPa.

Another factor important for abrasion resistance is the percentage coverage of the article provided by the recovered fabric. This depends on the coverage of the fabric before recovery of the article and the extent of recovery.

Preferably the coverage provided by the recovered fabric body is at least 60 percent, more preferably in the range 80 to 100%. The tubular fabric preferably has a recovery ratio (diameter before recovery: diameter after recovery) in the range 1.2:1 to 4:1.

An embodiment of the present invention will now be described, by way of example, with reference to the accompanying drawing, wherein

Figure 1 is a perspective view showing a section of a fairing according to the invention, installed on a cable before recovery,

Figure 2 is an enlarged view of section A of Figure 1, showing the fibres making up the fabric,

Figures 3a and 3b are schematic views showing interlinking arrangements of the fibres of the fabrics of the flange and the body in section B of Figure 1.

Figure 4 is a perspective view showing the fairing of Figure 1 after recovery.

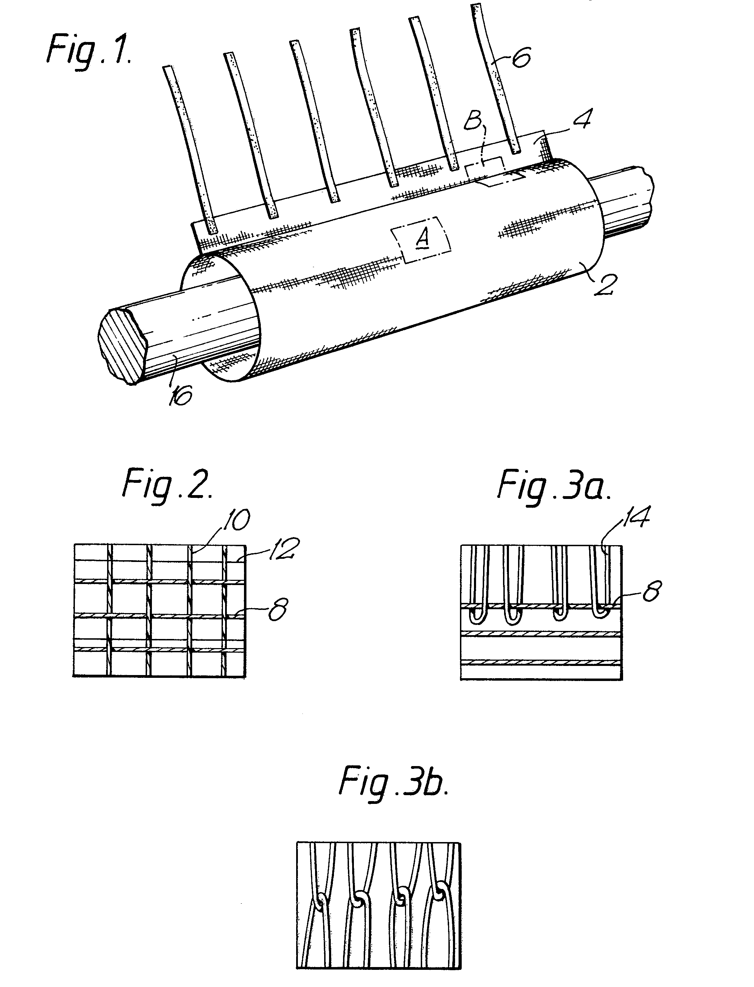

Referring to Figures 1 to 3 the fairing comprises a tubular woven, recovered body 2, a fabric, heat stable flange 4 and trailing members 6. The woven tubular body 2 comprises a warp of heat shrinkable Kevlar K29 multifilament fibre bundles (1500 denier, 1670 decitex), as supplied by Dupont, and a weft of high density polyethylene (470 decitex). The fabric structure is 2/2 twill. Also included in the fabric in the warp direction (i.e. along the length of the cable) are adhesive filaments 12. The flange 4 is also fabric. It comprises Kevlar fibres in both the weft and warp. The warp fibres are arranged to extend parallel to the warp fibres of the body. The weft fibres 14 of the flange 4 may interlink with the warp fibres of the body 2 (Figure 3a) or with the weft fibres of the body 2 (figure 3b). This secures the flange to the body. For simplicity the non-interlinking fibres of the flange 4 and the body 2 are not shown in Figure 3a and 3b. The flange 4 is not recoverable.

The fairing is positioned around a cable 16. In order to recover the fairing a heat shield (not shown) is positioned between the body and the trailing members and heat applied to the body to recover fibres 10 and melt adhesive filaments 12.

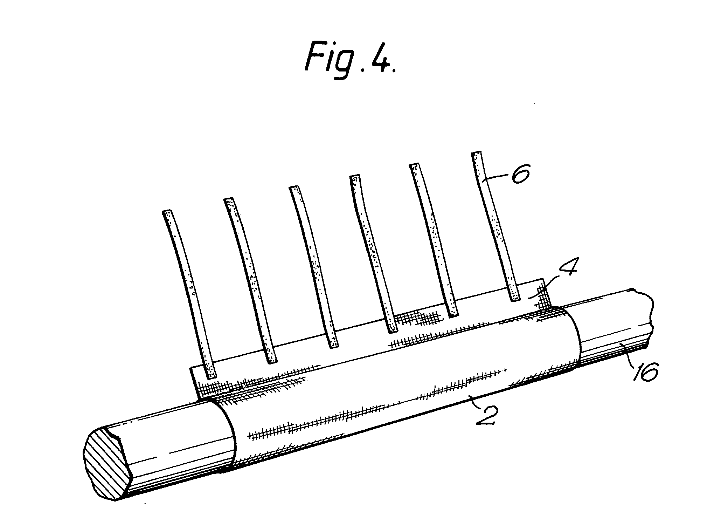

Figure 4 shows the fairing after heat recovery. The body has recovered into close conformity with the cable, and the adhesive filaments 12 have melted to secure the fabric body 2 to the cable 16. The flange 4 and trailing members 6 are uneffected by the recovery.

Typically the fairing is supplied in lengths of 1 m to 100 m, for application around cables.

To cover a cable of 15 mm diameter typical dimensions of the cable fairing are as follows
Body: Prerecovery diameter 40 mm
Post Recovery Percentage Coverage 90%
Recovery Ratio 3:1
Flange: Width 10 mm
Trailing Members: Length 120 mm
Width 20 mm
Thickness 0.1 mm
Spacing between adjacent members 2 mm
Separation from join-line with body 5mm

Claims

1. A fairing suitable for reducing the vibration of an object which is towed through water, comprising
a heat recoverable, fabric, tubular body
a flange secured to the tubular body, and
a plurality of trailing members secured to the flange.

2. A fairing according to claim 1, wherein the flange comprises a fabric which is secured to the tubular body by interlinking fibres of the flange with fibres of the tubular body.

3. A fairing according to claim 1 or 2 wherein the trailing members are stitched to the flange.

4. A fairing according to claim 2 or 3, wherein the junction between the flange and the body defines a join-line, and the trailing members are secured to the flange at a distance which is at least 3 mm from the join-line.

5. A fairing according to any preceding claim, wherein the tubular fabric comprises a warp of heat-stable fibres, and a helically wrapped weft of heat shrinkable fibres.

6. A fairing according to claim 5, wherein the fabric flange comprises a weave, and the warp or the weft of the flange has been linked with the weft of the tubular body.

7. A fairing according to any preceding claim, wherein the fabric of the tubular body has a recovery ratio of at least 2:1, preferably at least 3:1, and the body is preferably radially heat shrinkable.

8. A fairing according to any preceding claims wherein the fabric tubular body comprises recoverable fibres, and also fibres which comprise a heat-activatable adhesive, the heat activatable adhesive being activated at a temperature below the recovery temperature of the recoverable fibres.

9. A fairing according to any preceding claim, wherein the trailing members comprise a material having a tensile strength of at least 4 MPa.

10. A fairing according to any preceding claim, wherein the flange comprises a heat stable material.

Fig.1.

Fig.2.

Fig.3a.

Fig.3b.

0245065

Fig.4.